# EUROPÄISCHE PATENTSCHRIFT

(11) **EP 0 940 439 B1**
(45) Veröffentlichungstag und Bekanntmachung des Hinweises auf die Patenterteilung: **07.04.2004**
(21) Anmeldenummer: 99102223.7
(22) Anmeldetag: 04.02.1999
(51) Int. Cl.: C08L 51/06, C08F 255/00, C08L 23/02, C08L 23/12

(54) **verwendung von vernetzbaren formmassen zur herstellung von formteilen**
use of crosslinkable mouldings for producing moulded bodies
utilisation des moulages réticulables pour la fabrication des corps moules

(30) Priorität: 03.03.1998 DE 19808886
(43) Veröffentlichungstag der Anmeldung: 08.09.1999
(73) Patentinhaber: Degussa AG, 40474 Düsseldorf (DE)
(72) Erfinder: Wey, Hans Günther, Dr., 45470 Mülheim (DE); Bickert, Peter, Dr., 48249 Dülmen (DE)

(56) Entgegenhaltungen:
- EP-A- 0 325 573
- EP-A- 0 334 205
- EP-A- 0 412 518
- EP-A- 0 510 559
- EP-A- 0 827 994
- WO-A-91/08257
- DE-A- 4 402 943
- US-A- 5 241 014
- US-A- 5 461 110

## Beschreibung

Gegenstand der Erfindung ist die Verwendung einer vernetzbaren Formmasse, die ein silangepfropftes Poly-α-Olefin enthält, zur Herstellung von Formteilen..

Polymere bzw. Polymerblends erfreuen sich als thermoplastisch verarbeitbare Werkstoffe seit Jahren zunehmender Beliebtheit. Allerdings weiß der Fachmann, daß eine deutliche Abhängigkeit anwendungstechnisch wichtiger Eigenschaften wie z. B. Schlagzähigkeit, Reißfestigkeit oder Kriechneigung vom Molekulargewicht besteht Aus diesem Grund sollte der polymere Werkstoff ein möglichst hohes Molekulargewicht aufweisen, um im Fertigteil eine hohe Schlagzähigkeit, eine hohe Reißfestigkeit und eine nur geringe Kriechneigung zu besitzen. Dann ist die Schmelze jedoch so hochviskos, daß sie sich kaum mehr verarbeiten läßt. Aus diesem Grunde muß man einen Kompromiß eingehen und eine schlechtere Schlagzähigkeit sowie höhere Kriechneigung in Kauf nehmen, sofern man eine gut verarbeitbare Formmasse wünscht. Dies gilt insbesondere für Spritzgußformmassen, die besonders leicht fließfähig sein müssen.

Bei Polymerblends kommt ein weiteres Problem hinzu. Da die weitaus meisten Polymere miteinander unverträglich sind, gelingt es zwar unter starker Scherung zunächst, die eine Blendkomponente dispers oder als Netzwerk in der anderen Blendkomponente zu verteilen. Gerät die Schmelze jedoch anschließend in eine Zone niedrigerer oder fehlender Scherung, z. B. eine Form, so koalesziert die zunächst feinverteilte Phase zu größeren Tröpfchen. Das erhaltene Teil ist nach dem Erstarren außerordentlich spröde und damit unbrauchbar.

In Sonderfällen gelingt es zwar, durch chemische Verknüpfung der beiden Blendkomponenten eine gute Dispergierbarkeit ohne anschließende Koaleszenz zu erreichen. Zudem findet man in solchen Fällen, daß die beiden Phasen adhäsiv aufeinander haften. Das Ausmaß der Haftung reicht jedoch häufig nicht aus, um die erwünschte hohe Schlagfestigkeit zu erzielen. Vor diesem Problem steht der Fachmann beispielsweise, wenn er versucht, thermoplastische Polyester wie Polyethylenterephthalat oder Polybutylenterephthalat durch Eincompoundieren von Kautschuken, die funktionalisiert sind, beispielsweise von maleinsäureanhydridfunktionalisertem Ethylen-Propylen-Kautschuk (EPM) oder Ethylen-Propylen-Dien-Kautschuk (EPDM), schlagzäh einzustellen. Für eine ausreichende Reaktion der OH-Endgruppen des Polyesters mit den Anhydridgruppen des Kautschuks ist eine anschließende Festphasennachkondensation erforderlich, was hohe Verfahrenskosten verursacht.

Eine Aufgabe der vorliegenden Erfindung war es daher, Formteile mit sehr hoher Schlagzähigkeit, hoher Reißfestigkeit und sehr geringer Kriechneigung aus einer gut verarbeitbaren Formmasse herzustellen.

Eine weitere Aufgabe bestand darin, Formteile aus einer Formmasse herzustellen, in die sich Blendkomponenten unter Entstehung phasenstabiler Blends gut einmischen lassen.

Schließlich lag eine weitere Aufgabe darin begründet, Formteile aus Polymerblends herzustellen, die eine stabilisierte Morphologie besitzen und bei denen an der Grenzfläche eine starke Phasenhaftung vorliegt.

Diese Aufgaben werden erfindungsgemäß durch die Verwendung einer Formmasse zur Herstellung von Formteilen gelöst, die im wesentlichen folgende Komponenten enthält:
(a) 3 bis 98 Gew.-Teile eines oder mehrerer Thermoplaste,
(b) 2 bis 97 Gew.-Teile eines weitgehend amorphen Poly-α-Olefins,
das mit einem Silan radikalisch gepfropft ist, welches mindestens eine olefinische Doppelbindung sowie eine bis drei direkt mit dem Silicium verbundene Alkoxygruppen besitzt,
wobei dieses gepropfte Poly-α-Olefin eine Schmelzeviskosität bei 190 °C im Bereich von 100 bis 50 000 mPas besitzt, gemessen in Anlehnung an DIN 53019 in einem Rotationsviskosimeter bei einer Schergeschwindigkeit von 30,5 s⁻¹ und sich die Gew.-Teile von (a) und (b) auf 100 ergänzen, und
wobei weiterhin die Formmasse 0 bis weniger als 0,5 Gew.-Teile eines Verstärkungsmittels enthält.

Formmassen mit einem höheren Gehalt an Verstärkungsmitteln sind Gegenstand der deutschen Patentanmeldung Nr. 198 08 888.4 vom gleichen Tage.

In einer bevorzugten Ausführungsform enthält die verwendete Formmasse im wesentlichen folgende Komponenten:
(a) 44,5 bis 98 Gew.-Teile eines oder mehrerer Thermoplaste und
(b) 2 bis 55,5 Gew.-Teile eines weitgehend amorphen, silangepfropften Poly-α-Olefins.

In einer besonders bevorzugten Ausführungsform enthält die verwendete Formmasse im wesentlichen folgende Komponenten:
(a) Mehr als 80 bis 97 Gew.-Teile eines oder mehrerer Thermoplaste und
(b) 3 bis weniger als 20 Gew.-Teile eines weitgehend amorphen, silangepfropften Poly-α-Olefins.

Der Thermoplast [Komponente (a)] kann beispielsweise ein Polyolefin, ein Polystyrol, ein Polyphenylenether, ein Polykondensat wie Polyester oder Polyamid, ein Polyurethan und/oder ein Kautschuk sein.

Geeignete Polyolefine sind grundsätzlich jedes Polyolefin des Standes der Technik, beispielsweise Polyethylen, Polypropylen und Poly-1-buten, aber auch Copolymere. von Ethen, Propen bzw. 1-Buten, entweder als Randomcopolymer wie z. B. LLDPE oder Propen-Ethen-Randomcopolymere mit etwa 1 - 15 Gew.-% Ethen, oder als Blockcopolymere wie z. B. Propen-Ethen-Blockcopolymere. Genauso kann das Polyolefin ein weitgehend amorphes Polyolefin sein, wie es als Pfropfgrundlage für die Komponente (b) verwendet werden kann. Das Polyolefin kann auch einen Kautschuk als Schlagzähmacher enthalten, beispielsweise Ethen/Propen-Kautschuk (EPM) oder Ethen/Propen/Dien-Kautschuk (EPDM). Alle diese Polymere sind dem Fachmann wohlbekannt, weshalb sich eine weitere Beschreibung erübrigt.

Das Polystyrol kann entweder als solches oder in kautschukmodifizierter Form eingesetzt werden, wobei die Wahl des Kautschukes, etwa Butadienkautschuk (BR), EPDM, Styrol-Butadien-Styrol-Blockpolymere (SBS) oder Polyoctenamer (TOR), unkritisch ist. Das Polystyrol kann als Homopolymeres vorliegen; es kann aber auch zur Erhöhung der Wärmeformbeständigkeit Comonomere wie α-Methylstyrol, Acrylnitril, Methylmethacrylat oder N-Phenylmaleinimid einpolymerisiert enthalten.

Polyphenylenether entstehen durch oxidative Kopplung von 2,6-Dialkylphenolen; sie sind beispielsweise in den US-PSS 3 306 874 und 3 306 875 sowie in der EP-A-0 122 394 beschrieben. Üblicherweise werden sie als Polymerblend mit Polystyrol verwendet.

Geeignete Polyester sind beispielsweise Polyethylenterephthalat, Polybutylenterephthalat oder Copolyester, die 1.4-Cyclohexandimethanol als Comonomer enthalten.

Als Polyamid (PA) kann jeder verfügbare Typ eingesetzt werden, beispielsweise PA 46, PA 6, PA 66, PA 612, PA 1010, PA 1012, PA 11, PA 12, PA 1212 oder PA 6,3 T. Diese Typen brauchen dem Fachmann nicht näher erläutert zu werden.

Geeignete Polyurethane sind diejenigen, die thermoplastisch verarbeitbar sind, wobei die Art der eingesetzten Monomeren unkritisch ist.

Als geeigneter Kautschuk seien beispielsweise erwähnt:
EPM, EPDM, SBS, hydrierte Styrol-Butadien-Styrol-Blockpolymere (SEBS), SIS, Styrol-Butadien-Kautschuk (SBR), Butadienkautschuk (BR), Siliconkautschuk, Naturkautschuk (NR), Butylkautschuk und Chloroprenkautschuk. Dem Fachmann ist bekannt, daß derartige Kautschuke in den Kautschukcompounds als Mischungen mehrerer Kautschuktypen vorliegen können, wobei die Compounds üblicherweise auch Weichmacheröle, Vulkanisationsmittel und ggf. Vulkanisationsbeschleuniger enthalten.

Als weitgehend amorphes Poly-α-Olefin der Komponente (b) können beispielsweise ataktisches Polypropylen, ataktisches Poly-1-buten, Ethen-Propen-Copolymere, Ethen-1-Buten-Copolymere, Ethen-Propen-1-Buten-Terpolymere, Propen-1-Buten-Copolymere, Ethen-Propen-1-Hexen-Terpolymere, Ethen-Propen-1-Octen-Terpolymere, Ethen-1-Buten-1-Hexen-Terpolymere, Ethen-1-Buten-1-Octen-Terpolymere, Ethen-1-Hexen-1-Octen-Terpolymere, Propen-1-Buten-1-Hexen-Terpolymere, Propen-1-Buten-1-Octen-Terpolymere oder Propen-1-Hexen-1-Octen-Terpolymere verwendet werden.

Vorzugsweise wird hierbei ein weitgehend amorphes Poly-α-Olefin mit folgender Monomerenzusammensetzung verwendet:
0 bis 95 Gew.-% eines I-Olefins mit 4 bis 10 Kohlenstoffatomen;
5 bis 100 Gew.-% Propen und
0 bis 50 Gew.-% Ethen.

Besonders bevorzugt hat das weitgehend amorphe Poly-α-Olefin die Zusammensetzung
3 bis 95 Gew.-% eines α-Olefins mit 4 bis 10 Kohlenstoffatomen,
5 bis 97 Gew.-% Propen und
0 bis 20 Gew.-% Ethen.

Das α-Olefin mit 4 bis 10 Kohlenstoffatomen ist insbesondere 1-Buten, 1-Hexen oder 1-Octen.

Die Herstellung derartiger Copolymere bzw. Terpolymere ist unter anderem in der EP-A-0 023 249 beschrieben; sie sind beispielsweise unter der Bezeichnung VESTOPLAST im Handel erhältlich.

Der kristalline Anteil des weitgehend amorphen Poly-α-Olefins kann beispielsweise durch Bestimmen der Schmelzenthalpie mittels der DSC-Methode abgeschätzt werden. Hierbei wird eine abgewogene Probe zunächst mit einer Aufheizgeschwindigkeit von 10 °C/min von - 100 °C bis + 210 °C aufgeheizt, dann mit einer Geschwindigkeit von 10 °C/min wieder auf - 100 °C abgekühlt. Nachdem auf diese Weise die thermische Vorgeschichte der Probe eliminiert wurde, wird wiederum mit einer Geschwindigkeit von 10 °C/min auf 210 °C erhitzt und hierbei durch Integration des Schmelzpeaks, der auf den Kristallitschmelzpunkt Tₘ zurückzuführen ist, die Schmelzenthalpie der Probe bestimmt. Im Rahmen der Erfindung beträgt die Schmelzenthalpie des weitgehend amorphen Polyolefins maximal 100 J/g, bevorzugt maximal 60 J/g und besonders bevorzugt maximal 30 J/g.

Das aufzupfropfende Silan besitzt vorzugsweise drei direkt mit dem Silicium verbundene Alkoxygruppen. Beispielhaft seien Vinyltrimethoxysilan (VTMO), Vinyltriethoxysilan, Vinyl-tris(2-methoxy-ethoxy)silan, 3-Methacryloxypropyltrimethoxysilan [MEMO; H₂C=C(CH₃)COO(CH₂)₃-Si(OCH)₃], 3-Methacryloxypropyltriethoxysilan, Vinyldimethylmethoxysilan oder Vinylmethyldibutoxysilan genannt. Das Silan wird bei der Pfropfung üblicherweise in Mengen von 0,1 bis 10 Gew.-%, vorzugsweise 0,5 bis 5 Gew.-%, bezogen auf das Polyolefin, eingesetzt.

Das ungesättigte Silan kann auf das weitgehend amorphe Polyolefin nach allen Methoden des Standes der Technik aufgepfropft werden, beispielsweise in Lösung oder bevorzugt in der Schmelze, wobei ein Radikalspender in ausreichender Menge eingesetzt wird. Eine geeignete Arbeitsweise kann der DE-OS 40 00 695 entnommen werden.

Das gepfropfte weitgehend amorphe Polyolefin besitzt bevorzugt eine Schmelzeviskosität im Bereich von 1 000 bis 30 000 mPas.

Das gepfropfte, weitgehend amorphe Polyolefin kann anschließend in der Mischung mit dem Thermoplast vernetzt werden, was am einfachsten durch Einwirken von Wasser erzielt wird. Je nach Erfordernissen des Anwenders geschieht dies mittels Wasserdampf aus der Umgebungsluft, durch Wasserdampf, der in einem Gasstrom enthalten ist, durch Dampf- bzw. Heißwasserbehandlung oder durch Wasser, welches im Thermoplasten enthahen ist (insbesondere bei Polyamiden; eingeschränkt auch bei Polyestern). Diese Vernetzung kann am Formteil durchgeführt werden; es ist aber auch möglich, die Vernetzung in der Schmelze oder am Granulat vorzunehmen, insbesondere um höherviskose, für Extrusion geeignete Formmassen herzustellen.

Mit der Vernetzung erhält die Formmasse eine höhere Wärmeformbeständigkeit und verbesserte Reißfestigkeit; außerdem wird die Phasenmorphologie stabilisiert, so daß bei weiterer thermoplastischer Verarbeitung keine nachteiligen Eigenschaftsänderungen auftreten.

Bei der vorliegenden Erfindung hat sich gegenüber dem Stand der Technik überraschenderweise als zusätzlicher Vorteil erwiesen, daß sich diese Vernetzung schneller durchführen läßt, als wenn man gemäß dem Stand der Technik teilkristalline silangepfropfte Polyolefine einsetzt. Eine mögliche Erklärung hierfür könnte darin bestehen, daß die zur Vemetzung fähigen Gruppen weitestgehend in amorpher Phase vorliegen und, da der Glasübergangspunkt dieser amorphen Phase im Regelfall deutlich unterhalb der Raumtemperatur liegt, ausreichend mobil sind, um miteinander in Wechselwirkung treten zu können.

Zur Erhöhung der Vernetzungsgeschwindigkeit kann der Formmasse ein Vernetzungsbeschleuniger, üblicherweise eine Zinnorganylverbindung wie z. B. Dibutylzinndilaurat, zugesetzt werden. Dies kann entweder in reiner Form oder zur besseren Dosierbarkeit in Form eines Masterbatches erfolgen. Die Zugabe des Beschleunigers kann vor dem Aufschmelzen in Form einer "Trockenmischung" oder nach dem Aufschmelzen geschehen. Dabei haben sich Gehalte von 0,001 bis 20 Gew.-%, vorzugsweise 0,01 bis 5 Gew.-% im Masterbatch als geeignet erwiesen, so daß die Formmasse dann etwa 0,0001 bis 1 Gew.-% Vernetzungsbeschleuniger enthält.

Andererseits läßt sich, falls gewünscht, durch Zusatz nicht gepfropfter, leicht hydrolysierender Silane wie Hexadecyltrimethoxysilan oder Hexadecyltriethoxysilan die Vernetzungsgeschwindigkeit verringern. Das in die Formmasse eindiffundierende Wasser wird von diesen Silanen zumindest teilweise abgefangen, so daß es länger dauert, bis das zur Vernetzung des silangepfropften Polyolefins notwendige Wasser in der Formmasse zur Verfügung steht. Es empfiehlt sich, zu diesem Zweck Silane mit langkettigen Alkylresten zu verwenden, da diese beim Aufschmelzen der Produkte nicht verdampfen und so nicht als Wirkstoff verlorengehen und darüber hinaus keine Entsorgungs- und Arbeitsschutzprobleme verursachen.

Ob für eine der gewünschten Anwendungen der Einsatz von Vernetzungsbeschleunigern oder Vernetzungsverzögerern erforderlich ist, kann der Fachmann anhand einiger orientierender Versuche leicht selbst ermitteln.

In einer bevorzugten Ausführungsform bildet die vernetzte Komponente (b) ein dreidimensionales Netzwerk aus. Zum einen wird hierbei die Wärmeformbeständigkeit, die beim Eincompoundieren der Komponente (b) in die Komponente (a) zunächst etwas absinkt, durch die Vernetzung wieder angehoben.

Zum anderen wird durch ein derartiges Netzwerk die Kriechneigung stark verringert. Auch das elastische Rückstellvermögen wird durch ein derartiges Netzwerk verbessert. Darüber hinaus hat sich überraschenderweise gezeigt, daß durch ein solches Netzwerk auch die Schlagzähigkeit in vielen Fällen erheblich gesteigert werden kann.

Bei der Ausbildung dieser Netzwerkstruktur kann es in manchen Fällen vorteilhaft sein, wenn die Komponente (b) in der Mischung mit der Komponente (a) nicht molekulardispers verteilt ist, sondern eine eigene Phase bildet. In diesem Fall tritt nach dem Mischen der beiden Komponenten nur eine geringfügige Erniedrigung der Wärmeformbeständigkeit ein. Durch Vernetzen kann dann die Wärmeformbeständigkeit auf ein besonders hohes Niveau gebracht werden.

Eine Netzwerkphase läßt sich beim Schmelzemischen dann erzeugen, wenn das Viskositätsverhältnis der beiden Phasen und deren Volumenverhältnis in einer bestimmten Relation miteinander stehen und eine geeignete Schergeschwindigkeit gewählt wird. Die Zusammenhänge sind dem Fachmann bekannt, so daß dieser anhand seines Fachwissens in jedem Einzelfall leicht geeignete Parameter ermitteln kann.

Die Vorteile der Erfindung kommen in besonderer Weise zum Tragen, wenn die Komponente (a) ein Blend verschiedener Thermoplaste ist. Hier kann die Phasenmorphologie der Komponente (a) durch die Anwesenheit der Komponente (b) besonders wirkungsvoll stabilisiert werden. Dies liegt zum einen daran, daß die Komponente (b) eine außerordentlich starke Klebwirkung besitzt. Einerseits ist sie mit Polyolefinen physikalisch verträglich, andererseits ist sie in der Lage, mit den funktionellen Gruppen, die in Polykondensaten vorhanden sind, starke Bindungen einzugehen. Damit werden die einzelnen, an und für sich miteinander unverträglichen Blendkomponenten der Komponente (a) an der Phasengrenzfläche wirksam miteinander verklebt.

In Einzelfällen, in denen eine derartige Verklebung z. B. wegen des Fehlens geeigneter funktioneller Gruppen nicht gelingt, kann die Phasenmorphologie trotzdem durch die Ausbildung eines dreidimensionalen, chemisch vernetzen Netzwerks stabilisiert werden. In diesen Fällen kann die Vernetzung vorteilhaft in der Schmelze durchgeführt werden, z. B. durch Eindosieren von Wasser oder von anderen geeigneten Vernetzungsmitteln wie etwa Diolen. Die Koaleszenz der einzelnen Phasen wird hierdurch stark behindert.

Einige Beispiele von stabilisierten Polymerblends sollen im folgenden kurz erläutert werden:
1) Blends aus Polyamiden und thermoplastischen Polyestem besitzen im Regelfall wegen der Unverträglichkeit der beiden Polymere nur schlechte mechanische Eigenschaften und sind spröde. Durch Zusatz der Komponente (b) können beide Phasen miteinander verklebt werden, was die mechanischen Eigenschaften sprunghaft verbessert. Wegen des Wassergehalts der Polyamide ist es in der Regel empfehlenswert, die Komponente (b) zunächst mit dem Polyester vorzumischen und diese Mischung anschließend mit dem Polyamid zu compoundieren. Eine anschließende Vernetzung durch Konditionieren mit Wasser ist hier in der Regel überflüssig.
2) Blends aus Polyamiden und Polyolefinen weisen per se noch stärkere Unverträglichkeitserscheinungen auf. Ein möglicher Weg, die Komponenten miteinander verträglich zu machen, besteht gemäß dem Stand der Technik zwar darin, das Polyolefin mit z. B. Maleinsäureanhydrid radikalisch zu pfropfen. Im Falle von Polypropylen und verwandten Polymeren erhält man hier jedoch einen starken Molekulargewichtsabbau, was in diesem Fall unerwünscht ist, während die Pfropfung von Polyethylen zu einem starken und ebenfalls unerwünschten Molekulargewichtsanstieg führt. Zudem scheitert der Einsatz derartiger maleinsäureanhydrid-gepfropfter Polyolefine meist an deren mangelnder Verfügbarkeit.
   Durch Vormischen der Komponente (b) mit einem Polyolefin wie z. B. den verschiedensten Polyethylen- oder Polypropylentypen oder mit einem Kautschuk auf Polyolefinbasis wie z. B. EPM oder EPDM wird hingegen auf einfache Weise eine geeignete Blendkomponente für die verschiedensten Polyamide erhalten.
3) Gleiches gilt für Blends aus thermoplastischen Polyestern und Polyolefinen bzw. Kautschuken auf Polyolefinbasis. Hier kann die Komponente (b) wahlweise mit dem Polyester oder dem Polyolefin bzw. Kautschuk vorgemischt werden. Man kann aber auch besonders einfach alle Komponenten zusammen vorgeben und dann mischen.
   In vielen Fällen kann es, je nach Anwendungszweck, auch vorteilhaft sein, die Komponente (b) mit dem Polyester vorzumischen und diese Mischung dann in der Schmelze mit einem Polyolefin bzw. Kautschuk umzusetzen, der gemäß dem Stand der Technik mit einer ungesättigten Carbonsäure oder einem ungesättigten Säureanhydrid wie z. B. Maleinsäureanhydrid gepfropft ist. Hiermit läßt sich eine besonders starke Phasenhaftung erzielen.

Geeignete Mischaggregate sind üblicherweise verwendete Kneter oder Extruder, insbesondere Doppelschneckenextruder.

Die erhaltenen Formmassen lassen sich mit allen üblichen Methoden, z. B. durch Pressen, Spritzgießen oder Extrudieren, zu Formteilen verarbeiten.

### Beispiel 1:

Zur Herstellung eines silangepfropften Polyolefins wurde ein weitgehend amorphes Poly-α-Olefin folgender Monomerenzusammensetzung verwendet:
6 Gew.-% Ethen
64 Gew.-% Propen
30 Gew.-% 1-Buten.

In einem Doppelschneckenextruder (Berstorff ZE 40) wurde eine aus
92,9 Gew.-% dieses Poly-α-Olefins,
6,0 Gew.-% Vinyltrimethoxysilan (DYNASYLAN® VTMO) und
1,1 Gew.-% Dicumylperoxid
bestehende Mischung unter Luft- und Feuchtigkeitsausschluß bei einer Temperatur von etwa 170 °C gemischt und über eine Verweilzeit von ca. 90 s auf dieser Temperatur gehalten. Das überschüssige VTMO wurde in der letzten Zone des Extruders bei einem Vakuum von ca. 20 mbar verdampft und in Kühlfallen kondensiert. Das Produkt wurde durch die Zugabe von IRGANOX® 1076 stabilisiert. Seine Schmelzeviskosität bei 190 °C betrug 6 000 mPas.

### Beispiele 2 bis 5:

Mit Hilfe eines Werner & Pfleiderer-Doppelschneckenextruders wurden Mischungen eines isotaktischen Homopolypropylens (VESTOLEN® P 2000, DSM Polyolefine GmbH, Gelsenkirchen) mit dem Produkt aus Beispiel 1 hergestellt. Die Mischungen wurden zu Normprüfkörpern verspritzt, mit denen ein Zugversuch in Anlehnung an DIN 53 455 (Stab 4) unternommen wurde. Ein Teil der Normprüfkörper wurde vor dem Zugversuch einer Heißwasserbehandlung unterworfen, um zumindest einen Teil des silangepfropften Poly-α-Olefins zu vemetzen. Die Ergebnisse sind in der Tabelle 1 wiedergegeben.

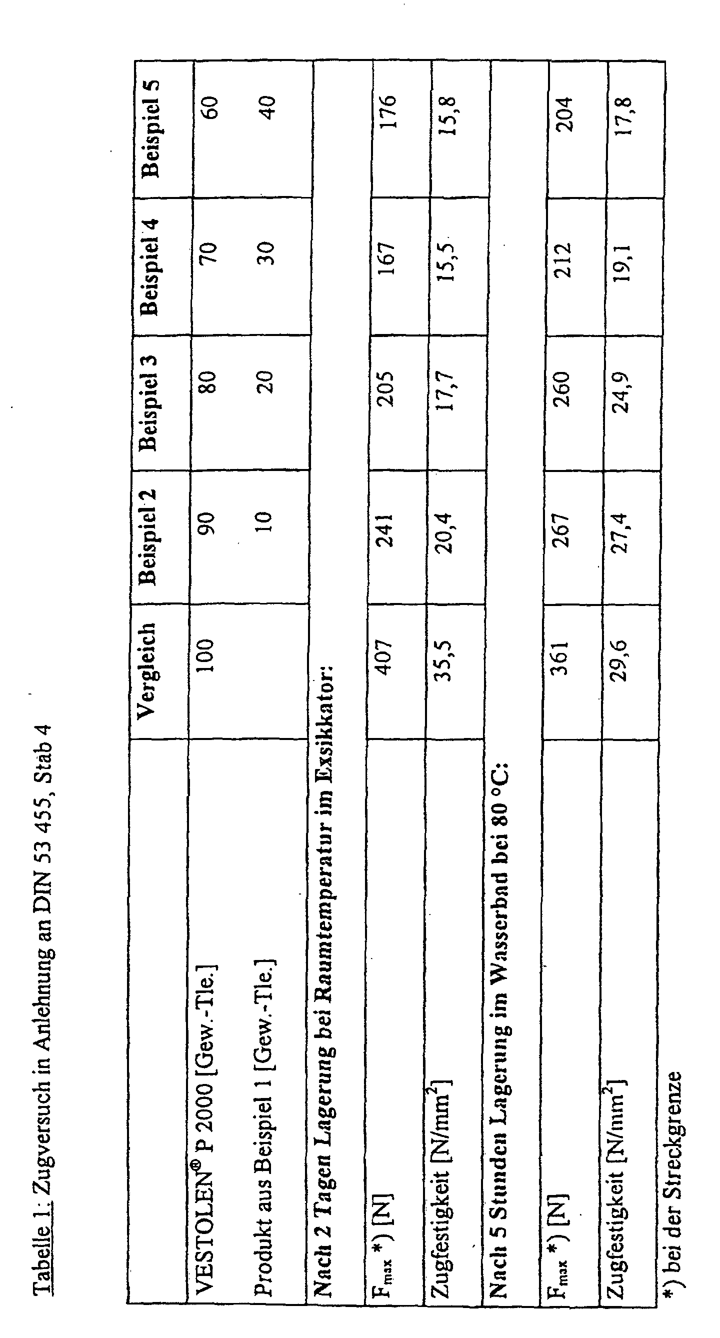

Man erkennt, daß Fₘₐₓ sowie die Zugfestigkeit durch die Wasserbehandlung zunehmen, obwohl die gewählten Bedingungen für eine vollständige Vernetzung bei weitem nicht ausreichen. Bei weiterer Heißwasserbehandlung werden dementsprechend auch weitere deutliche Verbesserungen der Meßwerte erzielt.

Ausgehend vom Homopolypropylen werden durch Zumischen des silangepfropften Poly-α-Olefins flexiblere Formmassen erhalten, die sowohl im frischen Zustand als auch nach Heißwasserbehandlung durch Behandlung mit üblichen Lacken mit festhaftenden Überzügen versehen werden können. Im Gegensatz dazu ergeben sowohl das Homopolypropylen als auch dessen Mischungen mit unfunktionalisiertem Poly-α-Olefin eine ausgesprochene schlechte Lackhaftung.

Darüber hinaus wurde festgestellt, daß die Formmassen der Beispiele 2 bis 5 mit zunehmender Heißwasserbehandlung eine zunehmend geringere Kriechneigung besitzen.

## Patentansprüche

1. Verwendung einer Formmasse, die im wesentlichen folgende Komponenten enthält:
(a) 3 bis 98 Gew.-Teile eines oder mehrerer Thermoplaste,
(b) 2 bis 97 Gew.-Teile eines Poly-α-Olefins mit einer Schmelzenthalpie J von maximal 100 J/g, das mit einem Silan gepfropft ist, welches mindestens eine olefinische Doppelbindung sowie eine bis drei direkt mit dem Silicium verbundene Alkoxygruppen besitzt,
wobei dieses gepfropfte Poly-α-Olefin eine Schmelzviskosität bei 190 °C im Bereich von 100 bis 50 000 mPas besitzt und sich die Gew.-Teile von (a) und (b) auf 100 ergänzen, und
wobei weiterhin die Formmassen 0 bis weniger als 0,5 Gew.-Teile eines Verstärkungsmittels enthalten,
zur Herstellung von Formteilen.

2. Verwendung gemäß Anspruch 1,
**dadurch gekennzeichnet,**
**dass** die Formmasse im wesentlichen folgende Komponenten enthält:
(a) 44,5 bis 98 Gew.-Teile eines oder mehrerer Thermoplaste und
(b) 2 bis 55,5 Gew.-Teile des silangepfropften Poly-α-Olefins.

3. Verwendung gemäß einem der vorhergehenden Ansprüche,
**dadurch gekennzeichnet,**
**dass** die Formmasse im wesentlichen folgende Komponenten enthält:
(a) Mehr als 80 bis 97 Gew.-Teile eines oder mehrerer Thermoplaste und
(b) 3 bis weniger als 20 Gew.-Teile des silangepfropften Poly-α-Olefins.

4. Verwendung gemäß einem der vorhergehenden Ansprüche,
**dadurch gekennzeichnet,**
**dass** der Thermoplast ein Polyolefin, ein Polyphenylenether, ein Polykondensat, ein Polyurethan und/oder ein Kautschuk ist.

5. Verwendung gemäß einem der vorhergehenden Ansprüche,
**dadurch gekennzeichnet,**
**dass** das Poly-α-Olefin ein ataktisches Polypropylen, ein ataktisches Poly-1-buten, ein Ethen-Propen-Copolymer, ein Ethen-1-Buten-Copolymer, ein Ethen-Propen-1-Buten-Terpolymer, ein Propen-1-Buten-Copolymer, ein Ethen-Propen-1-Hexen-Terpolymer, ein Ethen-Propen-1-Octen-Terpolymer, ein Ethen-1-Buten-1-Hexen-Terpolymer, ein Ethen-1-Buten-1-Octen-Terpolymer, ein Ethen-1-Hexen-1-Octen-Terpolymer, ein Propen-1-Buten-1-Hexen-Terpolymer, ein Propen-1-Buten-1-Octen-Terpolymer oder ein Propen-1-Hexen-1-Octen-Terpolymer ist.

6. Verwendung gemäß einem der vorhergehenden Ansprüche,
**dadurch gekennzeichnet,**
**dass** das Poly-α-Olefin folgende Monomerenzusammensetzung besitzt:
0 bis 95 Gew.-% eines α-Olefins mit 4 bis 10 Kohlenstoffatomen;
5 bis 100 Gew.-% Propen und
0 bis 50 Gew.-% Ethen.

7. Verwendung gemäß Anspruch 7,
**dadurch gekennzeichnet,**
**dass** das Poly-α-Olefin folgende Monomerenzusammensetzung besitzt:
3 bis 95 Gew.-% eines α-Olefins mit 4 bis 10 Kohlenstoffatomen;
5 bis 97 Gew.-% Propen und
0 bis 20 Gew.-% Ethen.

8. Verwendung gemäß einem der vorhergehenden Ansprüche,
**dadurch gekennzeichnet,**
**dass** das gepfropfte Poly-α-Olefin eine Schmelzeviskosität im Bereich von 1 000 bis 30 000 mPas besitzt.

9. Verwendung gemäß einem der vorhergehenden Ansprüche,
**dadurch gekennzeichnet,**
**dass** die Formmasse zusätzlich einen Vernetzungsbeschleuniger enthält.

10. Verwendung gemäß einem der vorhergehenden Ansprüche,
**dadurch gekennzeichnet,**
**dass** das silangepfropfte, Poly-α-Olefin vernetzt wird.

11. Verwendung gemäß Anspruch 10,
**dadurch gekennzeichnet,**
**dass** das vernetzte Poly-α-Olefin ein dreidimensionales Netzwerk ausbildet.

12. Verwendung gemäß einem der vorhergehenden Ansprüche,
**dadurch gekennzeichnet,**
**dass** die Komponente (a) ein Polymerblend ist.

13. Verwendung gemäß Anspruch 12,
**dadurch gekennzeichnet,**
**dass** die Komponente (a) ein Blend aus einem Polyamid und einem thermoplastischen Polyester ist.

14. Verwendung gemäß Anspruch 12,
**dadurch gekennzeichnet,**
**dass** die Komponente (a) ein Blend aus einem Polyamid und einem Polyolefin ist.

15. Verwendung gemäß Anspruch 12,
**dadurch gekennzeichnet,**
**dass** die Komponente (a) ein Blend aus einem thermoplastischen Polyester und einem Polyolefin ist.

16. Verwendung gemäß einem der vorhergehenden Ansprüche,
**dadurch gekennzeichnet,**
**dass** das Poly-α-Olefin eine Schmelzenthalpie von maximal 60 J/g besitzt.

17. Verwendung gemäß einem der vorhergehenden Ansprüche,
**dadurch gekennzeichnet,**
**dass** das Poly-α-Olefin eine Schmelzenthalpie von maximal 30 J/g besitzt.

## Claims

1. The use of a moulding material which essentially contains the following components:
(a) from 3 to 98 parts by weight of one or more thermoplastics,
(b) from 2 to 97 parts by weight of a poly-α-olefin having an enthalpy of fusion J of not more than 100 J/g which is grafted with a silane which has at least one olefinic double bond and one to three alkoxy groups bonded directly to the silicon,
this grafted poly-α-olefin having a melt viscosity at 190°C in the range from 100 to 50,000 mPa.s and the parts by weight of (a) and (b) summing to 100, and
the moulding materials further containing from 0 to less than 0.5 part by weight of a reinforcing agent,
for producing shaped articles.

2. The use according to claim 1, **characterized in that** the moulding material essentially contains the following components:
(a) from 44.5 to 98 parts by weight of one or more thermoplastics and
(b) from 2 to 55.5 parts by weight of the silane-grafted poly-α-olefin.

3. The use according to any one of the preceding claims, **characterized in that** the moulding material essentially contains the following components:
(a) from more than 80 to 97 parts by weight of one or more thermoplastics and
(b) from 3 to less than 20 parts by weight of the silane-grafted poly-α-olefin.

4. The use according to any one of the preceding claims, **characterized in that** the thermoplastic is a polyolefin, a polyphenylene ether, a polycondensate, a polyurethane and/or a rubber.

5. The use according to any one of the preceding claims, **characterized in that** the poly-α-olefin is an atactic polypropylene, an atactic poly-1-butene, an ethene/propene copolymer, an ethene/1-butene copolymer, an ethene/propene/1-butene terpolymer, a propene/1-butene copolymer, an ethene/propene/1-hexene terpolymer, an ethene/propene/1-octene ter-polymer, an ethene/1-butene/1-hexene terpolymer, an ethene/1-butene/1-octene terpolymer, an ethene/1-hexene/1-octene terpolymer, a propene/1-butene/1-hexene terpolymer, a propene/1-butene/1-octene terpolymer or a propene/1-hexene/1-octene terpolymer.

6. The use according to any one of the preceding claims, **characterized in that** the poly-α-olefin has the following monomer composition:
from 0 to 95% by weight of an α-olefin having from 4 to 10 carbon atoms,
from 5 to 100% by weight of propene and
from 0 to 50% by weight of ethene.

7. The use according to claim 6, **characterized in that** the poly-α-olefin has the following monomer composition:
from 3 to 95% by weight of an α-olefin having from 4 to 10 carbon atoms,
from 5 to 97% by weight of propene and
from 0 to 20% by weight of ethene.

8. The use according to any one of the preceding claims, **characterized in that** the grafted poly-α-olefin has a melt viscosity in the range from 1000 to 30,000 mPa.s.

9. The use according to any one of the preceding claims, **characterized in that** the moulding material additionally contains a crosslinking accelerator.

10. The use according to any one of the preceding claims, **characterized in that** the silane-grafted poly-α-olefin is crosslinked.

11. The use according to claim 10, **characterized in that** the crosslinked poly-α-olefin forms a three-dimensional network.

12. The use according to any one of the preceding claims, **characterized in that** the component (a) is a polymer blend.

13. The use according to claim 12, **characterized in that** the component (a) is a blend of a polyamide and a thermoplastic polyester.

14. The use according to claim 12, **characterized in that** the component (a) is a blend of a polyamide and a polyolefin.

15. The use according to claim 12, **characterized in that** the component (a) is a blend of a thermoplastic polyester and a polyolefin.

16. The use according to any one of the preceding claims, **characterized in that** the poly-α-olefin has an enthalpy of fusion of not more than 60 J/g.

17. The use according to any one of the preceding claims, **characterized in that** the poly-α-olefin has an enthalpy of fusion of not more than 30 J/g.

## Revendications

1. Utilisation d'une masse moulée qui contient essentiellement les composants suivants :
a) de 3 à 98 parties en poids d'un ou plusieurs thermoplastes,
b) de 2 à 97 parties en poids d'une poly-α-oléfine ayant une enthalpie de fusion J d'au maximum 100 J/g, greffée avec un silane qui possède au moins une double liaison oléfinlque ainsi qu'un à trois groupe(s) alkoxylé(s) directement au silicium,
dans laquelle cette poly-α-oléfine greffée possède une viscosité de fusion à 190°C dans la plage de 100 à 50 000 mPas, et les parties en poids de a) et de b) se complètant à 100, et
dans laquelle en outre les masses moulées renferment de 0 à moins de 0,5 parties en poids d'un produit de renforcement, en vue de la production de pièces moulées.

2. Utilisation conformément à la revendication 1.
**caractérisée en ce que**
la masse moulée renferme essentiellement les composants suivants :
a) de 44,5 à 98 parties en poids d'un ou plusieurs thermoplaste(s) et
b) de 2 à 55,5 parties en poids de la poly-α-oléfine greffée avec un silane.

3. Utilisation conformément à l'une des revendications précédentes,
**caractérisée en ce que**
la masse moulée renferme essentiellement les composants suivants :
a) plus de 80 à 97 parties en poids d'un ou plusieurs thermoplaste(s) et
c) de 3 à moins de 20 parties en poids de poly-α-oléfine greffée avec un silane.

4. Utilisation conformément à l'une des revendications précédentes,
**caractérisée en ce que**
le thermoplaste est une polyoléfine, un éther de polyphénylène, un polycondensat, un potyuréthane et/ou un caoutchouc.

5. Utilisation conformément à l'une des revendications précédentes,
**caractérisée en ce que**
la poly-α-oléfine est un polypropylène atactique, un poly-1-butène actactique, un copolyumère éthéne-propène, un copolymère éthène-1-butène, un terpolymère éthène-propène-1-butène, un copolymère propène-1-butène, un terpolymère éthène-propène-1-héxène, un terpolymère éthène-propène-1-octène, un terpolymère éthène-1-butène-1-héxène, un terpolymère-éthène-1-butène-1-octène, un terpolymère-éthène-1-héxène-1-octène, un terpolymère propène-1-butène-1-héxène, un terpolymère propène-1-butène-1-oetène ou un terpolymère-propène-1-héxène-1-octène.

6. Utilisation conformément à l'une des revendications précédentes,
**caractérisée en ce que**
la poly-α-oléfine possède la composition en monomères suivante :
de 0 à 95 % en poids d'une α-oléfine ayant de 4 à 10 atomes de carbone,
de 5 à 100 % en poids de propène et
de 0 à 50 % en poids d'éthène.

7. Utilisation conformément à la revendication 6,
**caractérisée en ce que**
la poly-α-oléfine possède la composition en monomères suivante :
de 3 à 95 % en poids d'une α-oléfine ayant de 4 à 10 atomes de carbone,
de 5 à 97 % en poids de propène et
de 0 à 20 % en poids d'éthène.

8. Utilisation conformément à l'une des revendications précédentes,
**caractérisée en ce que**
la poly-α-oléfine greffée possède une viscosité à la fusion dans la plage de 1000 à 30 000 mPas.

9. Utilisation conformément à l'une des revendications précédentes,
**caractérisée en ce que**
la masse moulée renferme en supplément un accélérateur de réticulation.

10. Utilisation conformément à l'une des revendications précédentes,
**caractérisée en ce que**
la poly-α-oléfine greffée sur un silane est réticulée.

11. Utilisation conformément à la revendication 10,
**caractérisée en ce que**
la poly-α-oléfine réticulée forme un réseau à trois dimensions.

12. Utilisation conformément à l'une des revendications précédentes,
**caractérisée en ce que**
la composant a) est un mélange de polymères.

13. Utilisation conformément à la revendication 12,
**caractérisée en ce que**
le composant a) est un mélange à base d'un polyamide et d'un polyester thermoplastique.

14. Utilisation conformément à la revendication 12,
**caractérisée en ce que**
le composant a) est un mélange à base d'un polyamide et d'une polyoléfine.

15. Utilisation conformément à la revendication 12,
**caractérisée en ce que**
le composant a) est un mélange à base d'un polyester thermoplastique et d'une polyoléfine.

16. Utilisation conformément à l'une des revendications précédentes,
**caractérisée en ce que**
la poly-α-oléfine possède une enthalpie de fusion d'au maximum 60 J/g.

17. Utilisation conformément à l'une des revendications précédentes,
**caractérisée en ce que**
la poly-α-oléfine possède une enthalpie de fusion d'au maximum 30 J/g.
